# EUROPÄISCHE PATENTSCHRIFT

(11) **EP 0 445 381 B1**
(45) Veröffentlichungstag und Bekanntmachung des Hinweises auf die Patenterteilung: **04.05.1994**
(21) Anmeldenummer: 90122979.9
(22) Anmeldetag: 30.11.1990
(51) Int. Cl.: B29C 61/06, B29C 67/14

(54) **Wärmeschrumpfbare Umhüllung**
Heat-shrinkable covering
Couverture thermo-rétractable

(30) Priorität: 08.03.1990 DE 4007378
(43) Veröffentlichungstag der Anmeldung: 11.09.1991
(73) Patentinhaber: RXS Schrumpftechnik-Garnituren GmbH, D-58093 Hagen (DE)
(72) Erfinder: Meltsch, Hans-Jürgen, W-5840 Schwerte 4 (DE); Brudermann, Uwe, Dr., W-2305 Heikendorf (DE)
(74) Vertreter: Fuchs, Franz-Josef, Dr.-Ing.

(56) Entgegenhaltungen:
- CH-A- 490 180
- DE-A- 3 707 433
- DE-A- 3 737 005

## Beschreibung

Die Erfindung bezieht sich auf eine wärmeschrumpfbare Umhüllung, die aus mindestens einer schrumpfbaren Komponente in Form einer Flächenfolie, einer darauf angebrachten Verstärkungskomponente mit Fasermaterial in ungeordneter Konfiguration und einer mit der schrumpfbaren Komponente verbundenen Deckfolie besteht.

Ein wärmeschrumpfbarer Gegenstand ist aus der EP-A2-0 299 439 bekannt. Dabei besteht die Verstärkungskomponente im wesentlichen aus geordneten, gitterförmig verlaufenden Einzelelementen. Die Aufbringung der Verstärkungselemente erfolgt so, daß die jeweiligen Flächenfolien bereits im vernetzten und gereckten Zustand vorliegen, so daß die Verstärkungskomponenten keiner Reckung unterworfen werden. Die Verstärkungselemente sind so gestaltet, daß eine der Schrumpfung der schrumpfbaren Komponente entsprechende Formänderung möglich ist.

Aus der DE-A-37 04 301 ist ein wärmerückstellbarer Gegenstand bekannt, bei dem die Verstärkungselemente aus kurzen Fasern (whiskers) aus anorganischen Werkstoffen bestehen, die in unregelmäßiger Anordnung in dem Kunststoff verteilt sind. Das Herstellungsverfahren für einen derartigen Gegenstand läuft so ab, daß eine Mischung aus einem thermoplastischen Kunststoff und den Fasern hergestellt wird, worauf diese Mischung zu einem Band oder Rohr extrudiert wird. Dieses Band oder Rohr wird anschließend vernetzt, auf eine Temperatur oberhalb des Kristallschmelzpunktes des Kunststoffes erwärmt, in der Wärme verformt und anschließend im gereckten bzw. aufgeweiteten Zustand abgekühlt. Die kurzen Fasern sind also von Anfang an Bestandteil der Extrusionsmasse und damit der später schrumpfenden Komponente. Der Nachteil einer derartigen Anordnung besteht vor allem darin, daß Fäden größerer Länge nur schwer eingebracht werden können, und daß von Anfang an das Extrusionswerkzeug so ausgelegt werden muß, daß diese zusätzlichen Bestandteile coextrudiert werden können. Außerdem besteht die Gefahr, daß die Fasern sich bei der Extrusion in Extrusionsrichtung ausrichten. Zudem besteht die Möglichkeit, daß sich die Fasern aus der Oberfläche "herausbohren" und insbesondere beim Schrumpfen nach außen dringen. Infolge des Extrusionsprozesses kommt es zu einer kaum oder nur sehr schwer kontrollierbaren Lagerung der Verstärkungsfasern. Außerdem ist bei Einbringung von einem größeren Anteil von Fasermaterial die Aufbringung sehr dünner Außenschichten stark erschwert, wobei auch zu berücksichtigen ist, daß die Extruderschnecke dieses Fasermaterial mittransportieren muß. Aus diesem Grund sind auch die Längen der Fasern sehr kurz gewählt und sollen zwischen nur 0,5 und 5 mm liegen, was für eine besonders gute und reißfeste Verstärkungsanordnung unter Umständen zu wenig ist.

Aus der DE-A-37 37 005 ist ein wärmeschrumpfbarer Gegenstand bekannt, bei dem quer zur Reck- und Schrumpfrichtung verlaufende, untereinander parallel liegende Fäden vorgesehen sind, die über die volle Länge des wärmeschrumpfbaren Gegenstandes verlaufen ( das heißt von einem zum anderen Ende). Über diese Unterlege aus parallel verlaufenden Einzelfäden werden kürzere Fasern gestreut, die von einem Vorratsbehälter entnommen und in willkürlicher Verteilung auf die mit den Fäden versehene Oberfläche des Trägerbandes aufgebracht werden. Die Fasern bestehen aus vernetzten Polymeren, das heißt es werden bereits vorvernetzte Fasermaterialien auf die Trägerschicht aufgebracht. Schwierigkeiten sind hierbei unter Umständen dadurch zu befürchten, daß die kurzen Faserstücke auf eine bereits vorhandene Lege von durchgehenden Parallelfäden aufgebracht werden und dadurch die Verstärkungseinlage eine insgesamt etwas inhomogene Sturktur erhält. Auch ist es schwierig, im nachfolgenden Walzvorgang die Deckschicht und die Grundschicht ausreichend gut und sicher mit dieser in sich unterschiedlichen strukturierten Verstärkungseinlage zu verbinden. Außerdem erfolgt der Herstellungsprozeß hinsichtlich der Verstärkungseinlage in zwei Schritten, indem zunächst auf ein Trägerband zum Beispiel aus Schmelzkleber die parallelen Fäden aufgebracht werden und anschließend über eine eigene Streu- und Schütteinrichtung die Zuführung der kurzen Faserelemente vorgenommen wird. Die Faserelemente sind in einer thermoplastischen Schicht eingebettet, die bei Reck- bzw. Schrumpftemperatur weich wird, so daß die Faserelemente beweglich sind und die Reck- bzw. Schrumpfbewegungen der Umhüllung möglichst nicht behindert werden. Dies hat jedoch zur Folge, daß gerade in diesen kritischen Abläufen keine Verstärkungswirkung durch die Faserelemente gegeben ist, so daß die Rißgefahr beim Reck- und Schrumpfvorgang bestehen bleibt.

Ausgehend vom letztgenannten Stand der Technik liegt dieser Erfindung die Aufgabe zugrunde, eine wärmeschrumpfbare Umhüllung der eingangs genannten Art so weiter zu bilden, daß deren Herstellung in einfacher Weise durchgeführt werden kann und daß diese gute Schrumpft und Verstärkungseigenschaften aufweist, wobei die Verstärkungswirkung auch während der Reck- und Schrumpfvorgänge gegeben sein soll.

Gemäß der Erfindung wird diese Aufgabe in einer ersten Weise dadurch gelöst, daß die Verstärkungskomponente ein selbständiges Formteil ist und als Vlies ausgebildet ist, daß die Anordnung der einzelnen Verstärkungselemente innerhalb der Verstärkungskomponente annähernd isotrop ist, und daß zwischen der Verstärkungskomponente der Flächenfolie sowie der Deckfolie eine feste Verbindung hergestellt ist.

Die Aufgabe wird gemäß der Erfindung in einer zweiten Weise dadurch gelöst, daß die Verstärkungskomponente ein selbständiges Formteil ist und als Filz ausgebildet ist, daß die Anordnung der einzelnen Verstärkungselemente innerhalb der Verstärkungskomponente annähernd isotrop ist und daß zwischen der Verstärkungskomponente, der Flächenfolie sowie der Deckfolie eine feste Verbindung hergestellt ist.

Die Aufgabe wird gemäß der Erfindung in einer dritten Weise dadurch gelöst, daß die Verstärkungskomponente ein selbständiges Formteil ist, bei dem die einzelnen Verstärkungselemente in loser Schüttung auf der Flächenfolie fixiert sind und ein Halbzeug bilden, daß die Anordnung der einzelnen Verstärkungselemente innerhalb der Verstärkungskomponente annähernd isotrop ist und daß zwischen der Verstärkungskomponente, der Flächenfolie sowie der Deckfolie eine feste Verbindung hergestellt ist.

Weiterhin liegt der Erfindung die Aufgabe zugrunde, ein Verfahren zu finden, mit dem eine Umhüllung der beschriebenen Art in einfacher Weise hergestellt werden kann. Diese Aufgabe wird dadurch gelöst, daß die Verstärkungskomponente vor dem Verbinden mit der Flächenfolie aus einzelnen Fasern oder Fäden in ungeordneter Konfiguration zu einem zunächst selbständigen Flächengebilde mit offenporiger, selbsttragender Struktur zusammengeformt werden.

Die wärmeschrumpfbare Umhüllung gemäß der Erfindung weist nun gegenüber dem Stand der Technik Vorteile auf, wobei die erzielte Festigkeit gegenüber äußeren Beanspruchungen mit einer relativ einfach herzustellenden Verstärkungskomponente im Verbund mit einer schrumpfbaren Matrix erreicht wird. Dies zeigt sich im Aufbau der wärmeschrumpfbaren Umhüllung selbst wie auch bei dem einfachen und kontinuierlich ablaufenden Verfahren zur Herstellung derselben.

Der Grundgedanke der Erfindung zur Bildung einer solchen wärmeschrumpfbaren Umhüllung liegt im wesentlichen darin, daß der Verstärkungseffekt durch Übergänge zwischen Materialien unterschiedlicher mechanischer Festigkeiten in der möglichen Rißrichtung des Gegenstandes begründet liegt. Bei den bisherigen Modellen ist jeweils eine geordnete Struktur vorzufinden, bei der es schwer ist, eine für das Schrumpfen erforderliche Beweglichkeit von relativ langen Verstärkungselementen zu erreichen. Bei vorliegender Erfindung wird die Regelmäßigkeit in der Anordnung der relativ langen Verstärkungselemente vermieden und es wird für die Anordnung der einzelnen Verstärkungselemente in Form von Fasern oder Fäden eine Isotropie angestrebt. Bei der Erfindung liegt im wesentlichen eine isotrope Anordnung der Fasern oder Fäden in zur Flächenfolie parallelen Ebenen vor; dagegen sollen die Fasern oder Fäden möglichst nicht oder zumindest nur zu einem geringen Teil etwa senkrecht zu dieser Flächenfolie verlaufen. Dies kann in einfacher Weise dadurch erfolgen, daß Fäden oder Fasern entsprechender Länge, die vorzugsweise dem 3- bis 50-fachen Wert der Dicke der Verstärkungskomponente entspricht, verwendet werden. Zweckmäßig ist dabei auch, daß die Lage der Verstärkungselemente vor wie auch nach der Reckung möglichst isotrop ist und bleibt. So können die einzelnen Verstärkungselemente gemäß der Erfindung vorteilhaft als Vlies oder als Filz zusammengeformt oder auch in einem speziellen Beschickungsvorgang entsprechend lose in ungeordneter Weise auf die Flächenfolie aufgestreut bzw. aufgelegt werden. Das Auflegen bzw. Aufstreuen in seiner Unordnung per se kann jedoch auch in einer gewollt gleichmäßigen Rundumverteilung erfolgen. Bei solchen Anordnungen der einzelnen faden- oder faserförmigen Verstärkungselemente zu einer Verstärkungskomponente sind die Forderungen bezüglich der Isotropie weitestgehend erfüllt und selbst bei der Reckung bzw. Schrumpfung fällt eine gewisse Störung nicht ins Gewicht, da die einzelnen Verstärkungselemente vor wie nach den Bewegungsvorgängen wiederum in beliebigen Richtungen liegen, jedoch bevorzugt mit ihren Längsachsen im wesentlichen parallel zur Flächenfolie verlaufen.

Die Dichte des strukturellen Aufbaues und die Materialeigenschaften der Verstärkungselemente bestimmen im Zusammenspiel mit der als Trägermaterial dienenden Flächenfolie die Festigkeit und den Widerstand gegen Rißbildung infolge mechanischer Belastungen. Die erfindungsgemäße Umhüllung zeigt dabei den Vorteil, daß diese Ausbildung der Verstärkungskomponente in Form eines Vlieses, Filzes oder der "ungeordneten Schüttung" bezüglich der Materialauswahl und der Feinheit der Struktur, sowie der Gleichmäßigkeit aller Eigenschaften eine beliebig frei wählbare Zusammenstellung zuläßt. Dabei muß gewährleistet sein, daß die Verstärkungskomponente den Reckvorgang und den Schrumpfvorgang unter Umständen bewirken bzw. zumindest zulassen, ohne daß dabei die Verbundfestigkeit gelöst wird. Dies ist beispielsweise bei flächigen Einlegen sowie bei Geweben oder Gewirken nicht möglich. Außerdem ist dort meist auch nur in einer Richtung der nötige Widerstand gegen Rißbildung gegeben.

Bei der erfindungsgemäßen Umhüllung besitzt zumindest eine der abdeckenden Folien, die Flächenfolie und/oder die Deckfolie, schrumpfende Eigenschaften. Durch diese wird der Schrumpfvorgang bewirkt, wobei die Verstärkungskomponente zumindest passiv die Formänderungen mitmacht, wenn nicht sogar unterstützt, wenn die einzelnen Verstärkungselemente ebenfalls Schrumpfeigenschaften besitzen.

Die Erfindung zeichnet sich auch dadurch besonders aus, daß das Herstellverfahren sehr einfach ist, denn es kann in kontinuierlicher Weise durchgeführt werden. Besonders günstig ist dabei die Ausbildung der Verstärkungskomponente als Vlies oder Filz, so daß sie dann auch als selbständiges Formteil in den Herstellungsprozeß eingeführt werden kann. Die Einzelheiten zu den möglichen Verfahrensschritten werden anhand der Figuren später erläutert.

Bei der möglichst isotropen Verstärkungskomponente gemäß der Erfindung ist darauf zu achten, daß bei dem vlies- oder filzartigen Aufbau oder euch bei der "losen Schüttung" der einzelnen Verstärkungselemente eine durchlässige bzw. offenporige Struktur erhalten bleibt, damit eine möglichst gute Verbindung zwischen den einzelnen Folien erreicht werden kann. Dies erfolgt im Verlauf des Herstellungsprozesses z.B. durch Verschweißen, Verkleben oder gegenseitige Materialdurchdringung, vor allem innerhalb der "porösen" Verstärkungskomponente.

Die Erfindung wird nun anhand von vier Figuren näher erläutert.
- Figur 1: zeigt ein Ausführungsbeispiel für eine Muffe, die als Manschette ausgebildet ist und den erfindungsgemäßen Aufbau aufweist.
- Figur 2: zeigt einen Querschnitt, aus dem der Schichtenaufbau der erfindungsgemäßen Muffe hervorgeht.
- Figur 3: verdeutlicht ein erstes Herstellungsverfahren zur Bildung der Kabelmuffe, bei der ein flächenhaftes Gebilde als Verstärkungskomponente in Form eines Vließes oder Filzes verwendet wird.
- Figur 4: verdeutlicht ein zweites Verfahren zur Herstellung einer Muffe gemäß der Erfindung, bei der lose Fasern bzw. Fäden als Verstärkungskomponente in den Schichtenverbund der Muffe eingebracht werden.

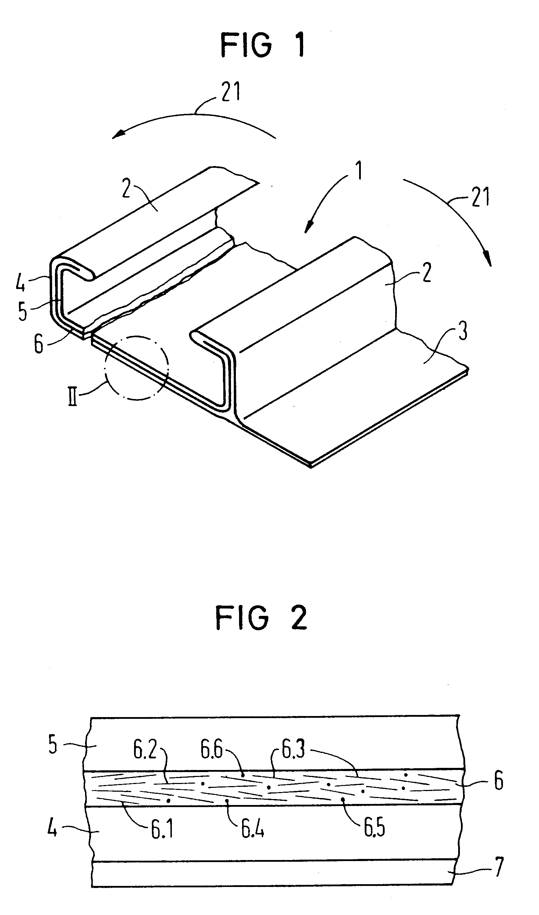

Die Figur 1 verdeutlicht eine Muffe in Form einer Menschette 1, wie sie üblicherweise zum Umhüllen von Gegenständen, zum Beispiel von Kabeln, Spleißen oder dergleichen, verwendet wird. Die Größe der skizzierten Manschette 1 richtet sich jeweils nach den Durchmessern des zu umhüllenden Gegenstandes, deshalb ist hier der eigentliche Umhüllungsteil in unterbrochener Weise skizziert. An beiden Enden des Umhüllungsteils sind L-förmige Verschlußelemente 2 so angeformt, daß sie nach dem Umschlagen in Richtung der beiden Pfeile 21 um den zu umhüllenden Gegenstand herum mit ihren senkrecht abstehenden Dichtungsflächen gegenüber liegen. Über die nun entstandene T-Form der beiden Verschlußelemente 2 wird bei der Montage eine entsprechende Verschlußschiene aufgeschoben. Der Fortsatz 3 dient dabei als Untertritt und überdeckt den Längsschlitz im Inneren der Manschette. In der Figur ist weiter angedeutet, daß die erfindungsgemäße Manschette 1 aus zwei Folienschichten 4 und 5 besteht, zwischen denen eine Verstärkungskomponente 6 eingelagert ist. Von diesen Folienschichten der Flächenfolie, 4 bzw. der Deckfolie, 5 ist mindestens eine als schrumpfbare Matrix ausgebildet und besteht aus einer Flächenfolie aus an sich bekanntem Schrumpfcompound, zum Beispiel aus auf der Basis von Polyethylen oder Polyolefinen oder Polypropylen. Die dazwischenliegende Verstärkungskomponente 6 besteht aus Fasermaterial, wobei die Fasern oder Fäden in ungeordneter Konfiguration enthalten sind. Zwischen den einzelnen Schichten besteht eine feste Verbindung untereinander.

In Figur 2 ist nun ein vergrößerter Querschnitt durch den Schichtenaufbau der erfindungsgemäßen wärmeschrumpfberen Umhüllung gezeigt. Daraus wird deutlich, daß die Verstärkungskomponente 6 in diesem Fell zwischen der Flächenfolie 4 und der Deckfolie 5 angeordnet ist. Die Verstärkungskomponente 6 besteht aus Fasermaterial, wobei dieses Fasermaterial aus fiber- oder fadenförmigen Abschnitten gebildet wird, die in ungeordneter Konfiguration zusammengebracht sind. So können diese einzelnen Verstärkungselemente beim Herstellungsvorgang lose auf die Flächenfolie 4 aufgestreut oder aufgelegt werden. Eine weitere Möglichkeit zur Herstellung einer Verstärkungskomponente 6 gemäß der Erfindung besteht darin, daß die einzelnen fiber- oder fadenförmigen Abschnitte zu einem Vlies oder Filz zusammengeformt werden, so daß sich eine zusammenhängende, flächenhafte Verstärkungskomponente ergibt. Die einzelnen Verstärkungselemente können verschieden lang sein und bebliebigen Querschnitt aufweisen. Die Verstärkungskomponente sollte jedoch insgesamt eine offenporige Struktur aufweisen, so daß sie beim Herstellungsprozeß sicher zwischen der Flächenfolie und der Deckfolie fixiert werden kann. Dabei ist zumindest eine dieser Folien, entweder die Flächenfolie 4 oder die Deckfolie 5, wärmeschrumpfbar. Doch können auch beide aus wärmeschrumpfbarem Material bestehen. Die Flächenfolie 4 ist dabei vor dem Aufbringen der Verstärkungskomponente noch ungereckt. Im Verlauf des Herstellungsverfahrens wird diese Schichtkombination weiterhin mit einer zusätzlichen Kleberschicht 7 versehen, wobei in ihr oder auf einer ihrer Oberflächen eine Permeationssperre angeordnet werden kann.

In Figur 2 ist weiter gezeigt, daß die (etwa in der Zeichenebene liegenden einzelnen Fäden oder Fasern 6.1, 6.2 und 6.3 der Verstärkungskomponente 6 im wesentlichen mit ihrer Längsrichtung etwa parallel zur Flächenfolie 4 verlaufen. Darüber hinaus gibt es, um eine Art "Netzwerk" zu erzeugen, natürlich auch Fäden oder Fasern 6.4, 6.5 und 6.6, die etwa senkrecht oder schräg zur Zeichenebene verlaufen, deren Längsachsen aber ebenfalls etwa parallel zur Flächenfolie 4 liegen. Es ist auch zu berücksichtigen, daß die Fäden oder Fasern 6.1 bis 6.6 wesentlich länger sind als die Dicke der Verstärkungskomponente 6, vorzugsweise 3 bis 50 mal länger. Auf diese Weise wird die erwähnte "Parallelität" der Längsachsen der Fäden oder Fasern zur Flächenfolie 4 bereits von den Abmessungen her gewährleistet.

Die Zwischenräume der zunächst "offenporigen" Verstärkungskomponente 6 sind im Endzustand mit (hier nicht dergestelltem) Material der Flächenfolie 4 und/oder der Deckfolie 5 oder mit einem Kleber gefüllt, so daß diese Folien insgesamt ein verstärktes Laminat ergeben.

Die Flächenfolie 4 sowie die Deckfolie 5 bestehen aus Kunststoffmaterial, vorzugsweise aus an sich bekannten Schrumpfcompounds auf der Basis von Polyethylen bzw. Polyolefin. Die einzelnen Verstärkungselemente der Verstärkungskomponente 6 können aus beliebigem Material bestehen, doch wird bevorzugt Kunststoffmaterial, vorzugsweise Polyethylen oder Polyolefin, in vernetzter oder unvernetzter Form verwendet. Die Verstärkungskomponente 6 wird vorzugsweise, wie auch aus Figur 1 bereits hervorgeht, auch in die Verschlußelemente 2 eingebracht, so daß auch diese verstärkt sind. Wenn im Bereich der Verschlußelemen te 2 noch zusätzliche Längsstäbe (nicht dargestellt) oder dergleichen vorgesehen sind, dann kann die Verstärkungskomponente (gegebenenfalls zusammen mit Flächenfolie und Deckfolie) in Form einer Vlies- oder Filzschicht um diese Längsstäbe herumgeschlungen werden und dadurch eine besonders zugfeste Anordnung ergeben.

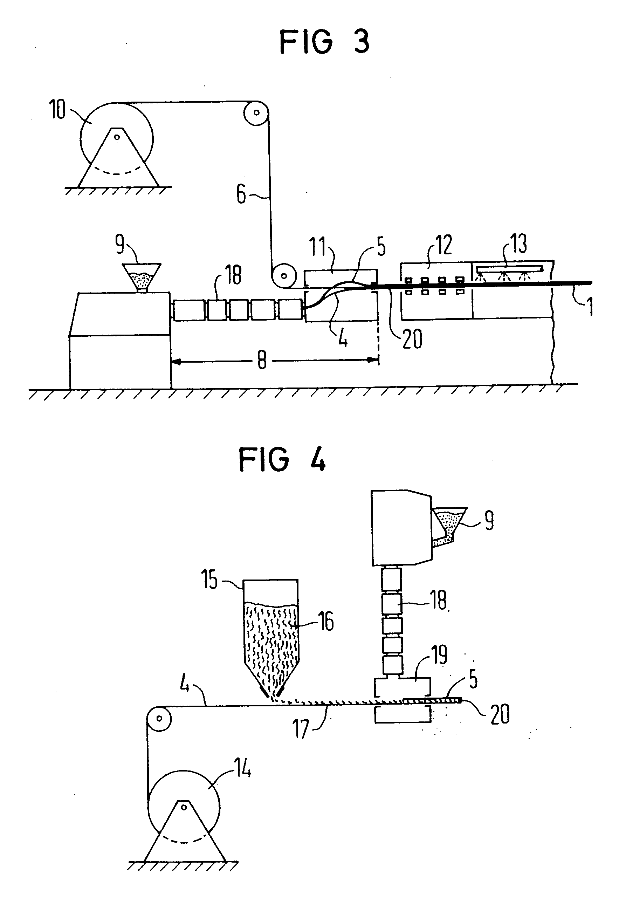

In Figur 3 wird ein erstes Verfahren zur Herstellung einer erfindungsgemäßen wärmeschrumpfbaren Umhüllung gezeigt. Hier wird eine bereits flächenhaft ausgebildete Verstärkungskomponente 6 in Form eines Vlieses oder eines Filzes verwendet. Diese Verstärkungscomponente 6 besteht aus einzelnen Fasern oder Fäden beliebiger, vorzugsweise der bereits beschriebenen Länge, die in ungeordneter, d.h. in isotroper Konfiguration so zusammengebracht sind, daß ein zunächst selbständiges Flächengebilde vorliegt, das beispielsweise auf einer Vorratstrommel 10 aufgewickelt werden kann. Dieses Flächengebilde hat eine offenporige und selbsttragende Struktur und kann beispielsweise bereits bei der Koextrusion der Flächenfolie 4 und der Deckfolie 5 aus Schrumpfcompound im Extruder 11 mit eingeführt werden. In diesem Fall ist angedeutet, daß die Flächenfolie 4 und die Deckfolie 5 aus dem gleichen Grundmaterial 9 bestehen, das über die Extruderschnecke 18 dem Extruder 11 zugeführt wird. Dies ist jedoch nicht zwingend; es könnte die Deckfolie 5 auch in einem späteren Verfahrensschritt aufgebracht werden. Hierfür könnte im Prinzip auch ein anderes (nicht schrumpfbares) verträgliches Kunststoffmaterial verwendet werden. Bei dem skizzierten Verfahren verläßt die Extruderstrecke 8 bereits des fertige einheitliche flächenhafte Gebilde mit dem in Figur 2 gezeigten Schichtenaufbau, wenn gleichzeitig die Beschichtung mit Kleber vorgenommen wurde. Anschließend erfolgt die Kalibrierung 12 und Abkühlung in der Abkühlzone 13 auf Raumtemperatur. Bei diesem Vorschlag erfolgt dann nachfolgend in der Vernetzungsstrecke die Vernetzung und anschließend die zum Einprägen des Formgedächtnisses erforderliche Dehnung bzw. Reckung (nicht dargestellt). In diesem gereckten Zustand wird schließlich die Abkühlung des flächenhaften, geweiteten Gebildes vorgenommen, so daß das Formgedächtnis "eingefroren" ist. Bei diesem Verfahren ist von Vorteil, daß die Verbindung aller Schichten bereits bei der Extrusion erfolgt, so daß aufgrund der offenporigen Struktur der Verstärkungskomponente 6 ein gegenseitiger Durchgriff der (noch heißen) Flächenfolie 4 und Deckfolie 5 durch die Verstärkungskomponente 6 hindurch zu einer innigen Verbindung aller Schichten führt. Der Herstellungsvorgang ist besonders einfach und sicher. Durch die offenporige und lose Anordnung der einzelnen Verstärkungselemente innerhalb der als Filz oder Vlies ausgebildeten Verstärkungskomponente 6 kann die Dehnung bzw. Reckung der Flächenfolie 4 und der Deckfolie 5 gemeinsam mit der Verstärkungskomponente erfolgen, da eine entsprechende Bewegung der einzelnen Verstärkungselemente innerhalb der Struktur möglich ist. Ferner wird hier bei diesem Herstellungsverfahren die Verstärkungskomponente 6 zusammen mit den beiden anderen Folien in einem einzigen Vorgang vernetzt, sofern die Fäden oder Fasern des Vlies- oder Filzmaterials 6 aus vernetzbarem Material bestehen.

Die Figur 4 erläutert eine weitere Variante des Herstellungsverfahrens gemäß der Erfindung. Hier wird von einer bereits extrudierten Flächenfolie 4 ausgegangen, die als entsprechend breites Band auf einer Vorratstrommel 14 aufgewickelt ist. Diese Flächenfolie 4 wird nun abgezogen und unterhalb einer Zuführungsvorrichtung 15 für Verstärkungselemente vorbeigeführt. Hier könnte, wie im erläuterten Verfahren zum Beispiel wiederum eine zum Vlies oder Filz geformte Verstärkungskomponente (von einer Trommel 10 wie in Figur 3 ablaufend) aufgetragen werden. In dem dargestellten Fall werden hingegen einzelne faser- oder fadenförmige Verstärkungselemente 16 vorzugsweise aus unvernetztem Kunststoffmaterial in ungeordneter Konfiguration aufgestreut oder aufgelegt, so daß sich nun ein Halbzeug 17, bestehend aus Flächenfolie 4 und den Verstärkungselementen 16 ergibt, wobei die Verstärkungselemente 16 entweder sofort oder im nachfolgenden Extruder 19 fixiert werden. Die Längsachsen der faser- oder fadenförmigen Verstärkungselemente verlaufen dabei, wie dies auch bei den erfindungsgemäßen vlies- oder filzartigen Konfigurationen der Fall ist, bevorzugt in einer zur Flächenfolie etwa parallelen Richtung, d.h. sie liegen im wesentlichen flach auf der Flächenfolie 4. Diese an sich ungeordnete Konfiguration kann jedoch auch mit einer bestimmten Vorzugsrichtung (für eine erhöhte Zugfestigkeit in einer bestimmten Richtung) ausgelegt sein, wobei die Anordnung der einzelnen Verstärkungselemente 16 unter sich ungeordnet bleibt. Die einzelnen Verstärkungselemente 16 können sowohl in der Form, Länge, Querschnitt, Material und dergleichen verschieden voneinander sein, so daß aus der Vielzahl von möglichen Konstellationen jeweils die für den Anwendungsfell günstigste gefunden werden kann.

Des Halbzeug 17 wird nun dem Extruderkopf 19 eines Extruders 18 zugeführt, der das Kunststoffmaterial 9 für die Deckfolie enthält. Das Halbzeug 17 wird nun im Extrusionsverfahren mit der Deckfolie versehen, so daß man am Ende dieser Extrusionsvorrichtung das einheitlich flächenhafte Gebilde 20 erhält, des in weiteren vorher bereits beschriebenen Verfahrensschritten wie Vernetzen, Weiten, Abkühlen etc. zur schrumpfbaren Umhüllung vollendet wird.

Statt der Extrusion der Deckfolie ist jedoch auch die Zuführung einer fertigen Deckfolie möglich, die in einer geeigneten Vorrichtung auf das Halbzeug 17 fest haftend aufgebracht wird, so daß dann ebenfalls das weiter zu verarbeitende einheitliche flächenhafte Gebilde als Ganzes vorliegt. Im Verlaufe des weiteren Verfahrens wird des flächenhafte Gebilde 20 in geweiteter oder ungeweiteter Form zusätzlich mit einer Kleberschicht und gegebenenfalls auch mit einer Permeationssperre versehen. Die Kleberschicht besteht vorzugsweise aus einem an sich bekannten Heißschmelzkleber und als Permeationssperre kann beispielsweise eine Aluminiumfolie, vorzugsweise ebenfalls mit Kleberbeschichtung, aufgebracht werden.

Diese beiden Verfahrensbeispiele deuten an, daß eine Vielzahl von Möglichkeiten zur Herstellung einer schrumpfbaren Umhüllung unter der Voraussetzung der erfindungsgemäßen Ausbildungen möglich ist, wobei in erster Linie zugrunde liegt, daß der Verstärkungseffekt der erfindungsgemäßen Verstärkungskomponente darin besteht, daß Übergänge zwischen Materialien verschiedener mechanischer Festigkeiten in möglicher Rißrichtung vorliegen. Diese Verstärkungskomponente ist jeweils mit aktiv schrumpfendem Kunststoffcompound der an sich bekannten Arten fest in Verbindung gebracht, wobei infolge der isotropen Konfiguration der Verstärkungskomponente trotzdem eine beinahe ungehinderte Dehnung bzw. Reckung wie auch eine später erfolgende Schrumpfung der fertigen Umhüllung möglich ist, wobei die Verstärkungseigenschaften erhalten bleiben. Die Verstärkungskomponente kann aus reckbaren oder aus reckbaren und schrumpfbaren sowie aus nicht reckbaren einzelnen Verstärkungselementen gebildet werden, wobei immer eine freie Bewegung gewährleistet sein muß, wie es bei einfacher Aufstreuung oder bei Bildung eines Vlieses oder Filzes der Fall ist. Es können durchaus auch mehrere Verstärkungskomponenten übereinander angeordnet werden, wobei gegebenenfalls jede dieser Verstärkungskomponenten mit einer Deckfolie versehen ist. Die Deckfolien werden entweder auf die jeweilige Verstärkungskomponente aufgebracht, doch ist auch der umgekehrte Vorgang möglich. Ebenso kann die Verstärkungskomponente auch zwischen zwei Deckfolien eingelagert werden. Der Zusammenhalt zwischen den einzelnen Folien, den Deckfolien, wie auch den Flächenfolien und den Verstärkungskomponenten erfolgt durch Schweißung, Klebung oder Materialdurchgriff, so daß die Verstärkungskomponente jeweils an, auf oder zwischen den Folien liegt. Es ist auch möglich, die Verstärkungskomponente zwischen Deckfolien einzulagern und dann erst auf die Flächenfolie aufzubringen, wobei dann vorzugsweise letztere als schrumpfbare Komponente ausgebildet ist.

Ziel der Erfindung ist eine Isotropie der Verstärkungskomponente, wie sie zum Beispiel bei einem Vlies oder einer filzartigen Struktur oder bei freier Aufstreuung gegeben ist, wobei diese Verstärkungskomponente jeweils in einer Matrix aus aktiv schrumpfendem Kunststoffmaterial eingebunden wird. Als Material für die einzelnen Verstärkungselemente eignen sich besonders unvernetzte Polymere, wie zum Beispiel High Weight - Heigh Density - Polyethylen (HWHDPE) oder Acrylnitrilbutadienstyrolterpolymer (ABS). Bei Verwendung solcher Verstärkungselemente erfolgt dann die Vernetzung erst später bei der Vernetzung des bereits zusammengstellten flächenhaften Gebildes.

Als Verstärkungselemente können auch einzelne Fäden oder Fasern bereits vor der Herstellung der Verstärkungskomponente miteinander verzwirnt oder verdreht werden.

## Patentansprüche

1. Wärmeschrumpfbare Umhüllung, die aus mindestens einer schrumpfbaren Komponente in Form einer Flächenfolie (4), einer darauf angebrachten Verstärkungskomponente (6) mit Fasermaterial in ungeordneter Konfiguration und einer mit der schrumpfbaren Komponente (4) verbundenen Deckfolie (5) besteht,
**dadurch gekennzeichnet,**
daß die Verstärkungskomponente (6) ein selbständiges Formteil ist und als Vlies ausgebildet ist, daß die Anordnung der einzelnen Verstärkungselemente (6.1, 6.2, 6.3, 6.4, 6.5, 6.6) innerhalb der Verstärkungskomponente (6) annähernd isotrop ist, und daß zwischen der Verstärkungskomponente (6), der Flächenfolie (4) sowie der Deckfolie (5) eine feste Verbindung hergestellt ist.

2. Wärmeschrumpfbare Umhüllung, die aus mindestens einer schrumpfbaren Komponente in Form einer Flächenfolie (4), einer darauf angebrachten Verstärkungskomponente (6) mit Fasermaterial in ungeordneter Konfiguration und einer mit der schrumpfbaren Komponente (4) verbundenen Deckfolie (5) besteht,
**dadurch gekennzeichnet,**
daß die Verstärkungskomponente (6) ein selbständiges Formteil ist und als Filz ausgebildet ist, daß die Anordnung der einzelnen Verstärkungselemente (6.1, 6.2, 6.3, 6.4, 6.5, 6.6) innerhalb der Verstärkungskomponente (6) annähernd isotrop ist, und daß zwischen der Verstärkungskomponente (6), der Flächenfolie (4) sowie der Deckfolie (5) eine feste Verbindung hergestellt ist.

3. Wärmeschrumpfbare Umhüllung, die aus mindestens einer schrumpfbaren Komponente in Form einer Flächenfolie (4), einer darauf angebrachten Verstärkungskomponente (6) mit Fasermaterial in ungeordneter Konfiguration und einer mit der schrumpfbaren Komponente (4) verbundenen Deckfolie (5) besteht,
**dadurch gekennzeichnet,**
daß die Verstärkungskomponente (6) ein selbständiges Formteil ist, bei dem die einzelnen Verstärkungselemente (16) in loser Schüttung auf der Flächenfolie (4) fixiert sind und ein Halbzeug (17) bilden, daß die Anordnung der einzelnen Verstärkungselemente (6.1, 6.2, 6.3, 6.4, 6.5., 6.6) innerhalb der Verstärkungskomponente (6) annähernd istotrop ist, und daß zwischen der Verstärkungskomponente (6) der Flächenfolie (4) sowie der Deckfolie (5) eine feste Verbindung hergestellt ist.

4. Wärmeschrumpfbare Umhüllung nach einem der vorhergehenden Ansprüche,
**dadurch gekennzeichnet,**
daß die Verstärkungskomponente (6) offenporig ausgebildet ist.

5. Wärmeschrumpfbare Umhüllung nach einem der vorhergehenden Ansprüche,
**dadurch gekennzeichnet,**
daß die Flächenfolie (4) und/oder die Deckfolie (5) als flächenhafte Matrix aus schrumpfbarem Material, vorzugsweise aus einem Polyolefin oder Polypropylen, ausgebildet ist.

6. Wärmeschrumpfbare Umhüllung nach Anspruch 5,
**dadurch gekennzeichnet,**
daß die Verstärkungskomponente (6) in der Matrix angeordnet ist.

7. Wärmeschrumpfbare Umhüllung nach einem der vorhergehenden Ansprüche,
**dadurch gekennzeichnet,**
daß die Verstärkungskomponente (6) durchgehend bis in die Verschlußelemente (2) eingelagert ist.

8. Wärmeschrumpfbare Umhüllung nach einem der vorhergehenden Ansprüche,
**dadurch gekennzeichnet,**
daß die Verstärkungselemente aus einem unvernetzten Polymeren, insbesondere aus High Weight - High Density - Polyethylen (HWHDPE) oder Acrylnitrilbutadienstyrolterpolymer (ABS) besteht.

9. Wärmeschrumpfbare Umhüllung nach einem der vorhergehenden Ansprüche,
**dadurch gekennzeichnet,**
daß die Verstärkungselemente aus faden- oder fiberartigen Abschnitten gleicher oder verschiedener Länge bestehen, wobei die Länge der Abschnitte mindestens so groß ist wie die Dicke der Verstärkungskomponente (6), vorzugsweise das 3- bis 50- fache beträgt.

10. Wärmeschrumpfbare Umhüllung nach einem der vorhergehenden Ansprüche,
**dadurch gekennzeichnet,**
daß die Verstärkungselemente runden Querschnitt aufweisen.

11. Wärmeschrumpfbare Umhüllung nach einem der Ansprüche 1 bis 9,
**dadurch gekennzeichnet,**
daß die Verstärkungselemente eckigen, vorzugsweise flachen, Querschnitt aufweisen.

12. Wärmeschrumpfbare Umhüllung nach einem der Ansprüche 1 bis 9,
**dadurch gekennzeichnet,**
daß die Verstärkungselemente wechselnden Querschnitt aufweisen.

13. Wärmeschrumpfbare Umhüllung nach einem der vorhergehenden Ansprüche,
**dadurch gekennzeichnet,**
daß zusätzlich zur ungeordneten Konfiguration von Verstärkungselementen auch ausgerichtete, geordnete Verstärkungselemente eingelagert sind.

14. Wärmeschrumpfbare Umhüllung nach einem der vorhergehenden Ansprüche,
**dadurch gekennzeichnet,**
daß die Verstärkungselemente aus reckbarem Material, beispielsweise aus Metall, z.B. Kupfer oder Kunststoffmaterial bestehen.

15. Wärmeschrumpfbare Umhüllung nach einem der Ansprüche 1 bis 13,
**dadurch gekennzeichnet,**
daß die Verstärkungselemente aus reckbarem und schrumpfbarem Material, vorzugsweise aus Kunststoffmaterial auf der Basis von Polyolefinen oder Polyethylen bestehen.

16. Wärmeschrumpfbare Umhüllung nach einem der Ansprüche 1 bis 13,
**dadurch gekennzeichnet,**
daß die Verstärkungselemente aus nicht reckbarem Material, vorzugsweise aus Glasfasern bestehen.

17. Wärmeschrumpfbare Umhüllung nach einem der vorhergehenden Ansprüche,
**dadurch gekennzeichnet,**
daß mehrere Verstärkungskomponenten (6) im Schichtenverbund angeordnet sind.

18. Wärmeschrumpfbare Umhüllung nach Anspruch 17,
**dadurch gekennzeichnet,**
daß jede Verstärkungskomponente (6) zumindest mit einer Flächenfolie (4) versehen ist.

19. Wärmeschrumpfbare Umhüllung nach einem der vorhergehenden Ansprüche,
**dadurch gekennzeichnet,**
daß die einzelnen Schichten miteinander verschweißt sind.

20. Wärmeschrumpfbare Umhüllung nach einem der Ansprüche 1 bis 18,
**dadurch gekennzeichnet,**
daß die einzelnen Schichten miteinander verklebt sind.

21. Wärmeschrumpfbare Umhüllung nach einem der Ansprüche 1 bis 18,
**dadurch gekennzeichnet,**
daß die einzelnen Schichten durch gegenseitige Materialdurchdringung miteinander verbunden sind.

22. Wärmeschrumpfbare Umhüllung nach einem der vorhergehenden Ansprüche,
**dadurch gekennzeichnet,**
daß die Verstärkungselemente der Verstärkungskomponente (6) aus einzelnen miteinander verzwirnten oder verdrehten Fäden oder Fasern gebildet sind.

23. Verfahren zur Herstellung einer Umhüllung insbesondere nach einem der vorhergehenden Ansprüche, wobei eine Verstärkungskomponente (6) auf eine ungereckte Flächenfolie (4) aufgebracht wird, die Flächenfolie (4) und die Verstärkungskomponente (6) mit einer Deckfolie (5) abgedeckt und zu einem einheitlichen flächenhaften Gebilde (1) verbunden und dieses Flächengebilde (1) erwärmt, gereckt und in gereckten Zustand abgekühlt wird,
**dadurch gekennzeichnet,**
daß die Verstärkungskomponente (6) vor dem Verbinden mit der Flächenfolie (4) aus einzelnen Fasern oder Fäden (6.1, 6.2, 6.3, 6.4, 6.5, 6.6) in ungeordneter Konfiguration zu einem zunächst selbständigen Flächengebilde mit offenporiger, selbsttragender Struktur zusammengeformt wird.

24. Verfahren nach Anspruch 23,
**dadurch gekennzeichnet,**
daß das einheitliche flächenhafte Gebilde (1) als Ganzes vernetzt wird.

25. Verfahren nach Anspruch 23,
**dadurch gekennzeichnet,**
daß die Flächenfolie (4) und/oder die Deckfolie (5) bereits vor dem Aufbringen der Verstärkungskomponente (6) vernetzt werden.

26. Verfahren nach einem der Ansprüche 23 bis 25,
**dadurch gekennzeichnet,**
daß als Verstärkungskomponente (6) unvernetztes Fasermaterial auf die Flächenfolie (4) aufgebracht wird.

27. Verfahren nach einem der Ansprüche 23 bis 25,
**dadurch gekennzeichnet,**
daß als Verstärkungskomponente (6) vernetztes Fasermaterial auf die Flächenfolie (4) aufgebracht wird.

28. Verfahren nach einem der Ansprüche 23 bis 27,
**dadurch gekennzeichnet,**
daß einzelne faden- oder faserförmige Verstärkungselemente zur Verstärkungskomponente (6) in der Art eines Vlieses zusammengeformt werden.

29. Verfahren nach einem der Ansprüche 23 bis 27,
**dadurch gekennzeichnet,**
daß einzelne faden- oder faserförmige Verstärkungselemente zur Verstärkungskomponente in der Art eines Filzes zusammengeformt werden.

30. Verfahren nach einem der Ansprüche 23 bis 27,
**dadurch gekennzeichnet,**
daß die Verstärkungskomponente (6) als Halbzeug (17) durch ungeregelte Schüttung von faden- oder faserförmigen Verstärkungselementen auf die Flächenfolie (4) gebildet wird, wobei die einzelnen Verstärkungselemente (16) auf der Flächenfolie (4) fixiert werden.

31. Verfahren nach einem der Ansprüche 23 bis 30,
**dadurch gekennzeichnet,**
daß die Verstärkungskomponente (6) in Coextrusion (11) mit der Flächenfolie (4) und/oder Deckfolie (5) zusammengebracht wird.

32. Verfahren nach einem der Ansprüche 23 bis 30,
**dadurch gekennzeichnet,**
daß die Verstärkungskomponente (6) durch ein Laminierungsverfahren, vorzugsweise durch Aufwalzen, auf die Flächenfolie (4) aufgebracht wird.

33. Verfahren nach einem der Ansprüche 23 bis 30,
**dadurch gekennzeichnet,**
daß die Verstärkungskomponente (6) durch Klebung auf die Flächenfolie (4) aufgebracht wird.

## Claims

1. Heat-shrinkable envelope which comprises at least one shrinkable component in the form of a planar film (4), a reinforcing component (6) which is applied thereon and has fibre material in disordered configuration, and a cover film (5) bonded to the shrinkable component (4), characterized in that the reinforcing component (6) is an independent moulding and is designed as a non-woven fabric, in that the arrangement of the individual reinforcing elements (6.1, 6.2, 6.3, 6.4, 6.5, 6.6) within the reinforcing component (6) is approximately isotropic, and in that a firm bond is produced between the reinforcing component (6), the planar film (4) and the cover film (5).

2. Heat-shrinkable envelope which comprises at least one shrinkable component in the form of a planar film (4), a reinforcing component (6) which is applied thereon and has fibre material in disordered configuration, and a cover film (5) bonded to the shrinkable component (4), characterized in that the reinforcing component (6) is an independent moulding and is designed as a felt, in that the arrangement of the individual reinforcing elements (6.1, 6.2, 6.3, 6.4, 6.5, 6.6) within the reinforcing component (6) is approximately isotropic, and in that a firm bond is produced between the reinforcing component (6), the planar film (4) and the cover film (5).

3. Heat-shrinkable envelope which comprises at least one shrinkable component in the form of a planar film (4), a reinforcing component (6) which is applied thereon and has fibre material in disordered configuration, and a cover film (5) bonded to the shrinkable component (4), characterized in that the reinforcing component (6) is an independent moulding in which the individual reinforcing elements (16) are fixed loosely distributed on the flat film (4) and form a semi-finished product (17), in that the arrangement of the individual reinforcing elements (6.1, 6.2, 6.3, 6.4, 6.5, 6.6) within the reinforcing component (6) is approximately isotropic, and in that a firm bond is produced between the reinforcing component (6), the planar film (4) and the cover film (5).

4. Heat-shrinkable envelope according to one of the preceding claims, characterized in that the reinforcing component (6) is open-pored in design.

5. Heat-shrinkable envelope according to one of the preceding claims, characterized in that the planar film (4) and/or the cover film (5) is designed as a planar matrix of shrinkable material, preferably of a polyolefin or polypropylene.

6. Heat-shrinkable envelope according to Claim 5, characterized in that the reinforcing component (6) is arranged in the matrix.

7. Heat-shrinkable envelope according to one of the preceding claims, characterized in that the reinforcing component (6) is incorporated continuously right into the closure elements (2).

8. Heat-shrinkable envelope according to one of the preceding claims, characterized in that the reinforcing elements comprise a non-crosslinked polymer, in particular high-weight, high-density polyethylene (HWHDPE) or acrylonitrile butadiene styrene terpolymer (ABS).

9. Heat-shrinkable envelope according to one of the preceding claims, characterized in that the reinforcing elements comprise filamentous or fibrous sections of equal or different length, the length of the sections being at least as great as, preferably 3 to 50 times, the thickness of the reinforcing component (6).

10. Heat-shrinkable envelope according to one of the preceding claims, characterized in that the reinforcing elements have a round cross-section.

11. Heat-shrinkable envelope according to one of Claims 1 to 9, characterized in that the reinforcing elements have an angular, preferably flat, cross-section.

12. Heat-shrinkable envelope according to one of Claims 1 to 9, characterized in that the reinforcing elements have a varying cross-section.

13. Heat-shrinkable envelope according to one of the preceding claims, characterized in that, in addition to the disordered configuration of reinforcing elements, aligned, ordered reinforcing elements are also incorporated.

14. Heat-shrinkable envelope according to one of the preceding claims, characterized in that the reinforcing elements comprise stretchable material, for example metal, e.g. copper, or plastic material.

15. Heat-shrinkable envelope according to one of Claims 1 to 13, characterized in that the reinforcing elements comprise stretchable and shrinkable material, preferably plastic material based on polyolefins or polyethylene.

16. Heat-shrinkable envelope according to one of Claims 1 to 13, characterized in that the reinforcing elements comprise non-stretchable material, preferably glass fibres.

17. Heat-shrinkable envelope according to one of the preceding claims, characterized in that a plurality of reinforcing components (6) are arranged to form a laminate.

18. Heat-shrinkable envelope according to Claim 17, characterized in that each reinforcing component (6) is provided with at least one planar film (4).

19. Heat-shrinkable envelope according to one of the preceding claims, characterized in that the individual layers are welded to one another.

20. Heat-shrinkable envelope according to one of Claims 1 to 18, characterized in that the individual layers are adhesively bonded to one another.

21. Heat-shrinkable envelope according to one of Claims 1 to 18, characterized in that the individual layers are bonded to one another by mutual material penetration.

22. Heat-shrinkable envelope according to one of the preceding claims, characterized in that the reinforcing elements of the reinforcing component (6) are formed from individual filaments or fibres which are twisted or entwined together.

23. Process for producing an envelope in particular according to one of the preceding claims, a reinforcing component (6) being applied to an unstretched planar film (4), the planar film (4) and the reinforcing component (6) being covered with a cover film (5) and being bonded to form a unitary planar construction (1) and this planar construction (1) being heated, stretched and cooled in the stretched state, characterized in that, before it is bonded to the planar film (4) of individual fibres or filaments (6.1, 6.2, 6.3, 6.4, 6.5, 6.6), the reinforcing component (6) is formed together in disordered configuration to give an at first independent planar construction with an open-pored, self-supporting structure.

24. Process according to Claim 23, characterized in that the unitary planar construction (1) is crosslinked as an entirety.

25. Process according to Claim 23, characterized in that the planar film (4) and/or the cover film (5) are crosslinked even before the application of the reinforcing component (6).

26. Process according to one of Claims 23 to 25, characterized in that non-crosslinked fibrous material, as reinforcing component (6), is applied to the planar film (4).

27. Process according to one of Claims 23 to 25, characterized in that crosslinked fibrous material, as reinforcing component (6), is applied to the planar film (4).

28. Process according to one of Claims 23 to 27, characterized in that individual filamentous or fibrous reinforcing elements are formed together in the manner of a non-woven fabric to give the reinforcing component (6).

29. Process according to one of Claims 23 to 27, characterized in that individual filamentous or fibrous reinforcing elements are formed together in the manner of a felt to give the reinforcing component.

30. Process according to one of Claims 23 to 27, characterized in that the reinforcing component (6) is formed as a semi-finished product (17) by the irregular distribution of filamentous or fibrous reinforcing elements on the planar film (4), the individual reinforcing elements (16) being fixed on the planar film (4).

31. Process according to one of Claims 23 to 30, characterized in that the reinforcing component (6) is combined with the planar film (4) and/or cover film (5) by coextrusion (11).

32. Process according to one of Claims 23 to 30, characterized in that the reinforcing component (6) is applied to the planar film (4) by a lamination process, preferably by rolling on.

33. Process according to one of Claims 23 to 30, characterized in that the reinforcing component (6) is applied to the planar film (4) by adhesive bonding.

## Revendications

1. Produit d'emballage rétractable par la chaleur qui constitué d'au moins un composant rétractable se présentant sous forme d'une feuille mince (4), d'un composant de renfort (6) disposé sur celui-ci et comportant un matériau constitué de fibres placées de façon désordonnée et d'une feuille mince de couverture (5) reliée au composant rétractable (4),
caractérisé en ce que le composant de renfort (6) est une pièce de forme autonome, se présentant sous forme d'un voile, les éléments de renfort individuels (6.1, 6.2, 6.3, 6.4, 6.5, 6.6) sont disposés dans le composant de renfort (6) approximativement de manière isotrope et qu'une liaison solide est réalisée entre le composant de renfort (6), la feuille mince (4) ainsi que la feuille mince de couverture (5).

2. Produit d'emballage rétractable qui est constitué d'au moins un composant rétractable, se présentant sous forme d'une feuille mince (4), d'un composant de renfort (6) disposé sur celui-ci et comportant un matériau constitué de fibres placées de façon désordonnée et d'une feuille mince de couverture (5) reliée au composant rétractable (4),
caractérisé en ce que
le composant de renfort (6) est une pièce de forme autonome se présentant sous forme d'un feutre, que les éléments de renfort individuels (6.1, 6.2, 6.3, 6.4, 6.5, 6.6) sont disposés dans le composant de renfort (6) approximativement de manière isotrope et qu'une liaison solide est réalisée entre le composant de renfort (6), la feuille mince (4) ainsi que la feuille mince de couverture (5).

3. Produit d'emballage rétractable par la chaleur qui est constitué d'au moins un composant rétractable se présentant sous forme d'une feuille mince (4), d'un composant de renfort (6) disposé sur celui-ci et comportant un matériau constitué de fibres placées de façon désordonnée et d'une feuille mince de couverture (5) reliée au composant rétractable (4),
caractérisé en ce que
le composant (6) est une pièce de forme autonome, dans laquelle les éléments de renfort (6) individuels sont fixés en vrac sur la feuille mince (4) et constituent un demi-produit (17), que les éléments de renfort individuels (6.1, 6.2, 6.3, 6.4, 6.5, 6.6) dans le composant de renfort (6) sont disposés approximativement de manière isotrope et qu'une liaison solide est réalisée entre le composant de renfort (6), la feuille mince (4) ainsi que la feuille mince de couverture (5).

4. Produit d'emballage rétractable selon l'une des revendications précédentes,
caractérisé en ce que
le composant de renfort (6) est un produit à pores ouverts.

5. Produit d'emballage rétractable selon l'une des revendications précédentes,
caractérisé en ce que
la feuille mince (4) et/ou la feuille de couverture (5) a une conformation de matrice superficielle en matière rétractable, de préférence en une polyoléfine, ou en polypropylène.

6. Produit d'emballage rétractable selon la revendication 5,
caractérisé en ce que
le composant de renfort (6) est disposé dans la matrice.

7. Produit d'emballage rétractable selon l'une des revendications précédentes,
caractérisé en ce que
le composant de renfort (6) est incorporé de manière continue jusque dans les éléments de fermeture (2).

8. Produit d'emballage rétractable selon l'une des revendications précédentes,
caractérisé en ce que
les éléments de renfort sont constitués d'un polymère non réticulé en particulier d'un polyéthylène haut poids-haute densité (HWHDPE) ou d'un polymère acrylonitrile-butadiène-styrène-(ABS).

9. Produit d'emballage rétractable selon l'une des revendications précédentes,
caractérisé en ce que
les éléments de renfort non constitués de morceaux coupés du genre de fils ou de fibres, de même longueur ou de longueurs différentes, la longueur des morceaux coupés étant au minimum aussi grande que l'épaisseur du composant de renfort (6), et de préférence de 3 à 50 fois plus grande.

10. Produit d'emballage rétractable selon l'une des revendications précédentes,
caractérisé en ce que
les éléments de renfort ont une section transversale circulaire.

11. Produit d'emballage rétractable selon l'une des revendications 1 à 9,
caractérisé en ce que
les éléments de renfort ont une section transversale anguleuse, de préférence plate.

12. Produit d'emballage rétractable selon l'une des revendications 1 à 9,
caractérisé en ce que
les éléments de renfort ont des sections transversales variables.

13. Produit d'emballage rétractable selon l'une des revendications précédentes,
caractérisé en ce qu'
en plus de la configuration désordonnée des éléments de renfort, des éléments de renfort alignés et ordonnés sont incorporés.

14. Produit d'emballage rétractable selon l'une des revendications précédentes,
caractérisé en ce que
les éléments de renfort sont en un matériau susceptible d'être étiré, par exemple en un métal tel que le cuivre, ou en une matière plastique.

15. Produit d'emballage rétractable selon l'une des revendications 1 à 13,
caractérisé en ce que
les éléments de renfort sont en un matériau susceptible d'être étiré et de se rétracter, de préférence en une matière plastique à base de polyoléfines ou de polyéthylène.

16. Produit d'emballage rétractable selon l'une des revendications 1 à 13,
caractérisé en ce que
les éléments de renfort sont en un matériau non susceptible d'être étiré, de préférence en fibres de verre.

17. Produit d'emballage rétractable selon l'une des revendications précédentes,
caractérisé en ce que
plusieurs composants de renfort (6) sont disposés sous forme de stratifié.

18. Produit d'emballage rétractable selon la revendication 17,
caractérisé en ce que
chaque composant de renfort (6) est muni d'au moins une feuille mince (4).

19. Produit d'emballage rétractable selon l'une des revendications précédentes,
caractérisé en ce que
les couches individuelles sont soudées ensemble.

20. Produit d'emballage rétractable selon l'une des revendications 1 à 18,
caractérisé en ce que
les couches individuelles sont collées ensemble.

21. Produit d'emballage rétractable selon l'une des revendications 1 à 18,
caractérisé en ce que
les couches individuelles adhèrent les unes au autres par interpénétration des matières.

22. Produit d'emballage rétractable selon l'une des revendications précédentes,
caractérisé en ce que
les éléments de renfort du composant de renfort (6) sont formés de fils ou de fibres individuels retordus ou tordus ensemble.

23. Procédé de fabrication d'un produit d'emballage, notamment selon l'une des revendications précédentes, un composant de renfort (6) étant déposé sur une feuille mince (4) non étirée, la feuille mince (4) et le composant de renfort (6) étant recouverts d'une feuille de couverture (5) et reliés pour former un produit (1) homogène plat, ce produit (1) plat étant chauffé, étiré et refroidi à l'état étiré,
caractérisé en ce que
le composant de renfort (6) est conformé avant d'être relié à la feuille mince (4), à partir de fibres ou de fils (6.1, 6.2, 6.3., 6.4, 6.5, 6.6) disposées de façon désordonnée, en un produit plat d'abord autonome, comportant des pores ouverts et doté d'une structure auto-portante.

24. Procédé selon la revendication 23,
caractérisé en ce que
le produit homogène plat (1) est réticulé dans son ensemble.

25. Procédé selon la revendication 23,
caractérisé en ce que
la feuille mince (4) et/ou la feuille mince (5) de couverture est déjà réticulée avant l'apport du composant de renfort (6).

26. Procédé selon l'une des revendications 23 à 25,
caractérisé en ce qu'
un matériau fibreux et non réticulé est déposé sur la feuille mince (4) en tant que composant de renfort (6).

27. Procédé selon l'une des revendications 23 à 25,
caractérisé en ce qu'
un matériau fibreux et réticulé est déposé sur la feuille mince (4) en tant que composant de renfort (6).

28. Procédé selon l'une des revendications 23 à 27,
caractérisé en ce que
des éléments de renfort individuels sous forme de fils ou de fibres sont conformés ensemble pour constituer un composant de renfort (6) du genre d'un tissu non tissé.

29. Procédé selon l'une des revendications 23 à 27,
caractérisé en ce que
des éléments de renfort individuels sous forme de fils ou de fibres sont conformés ensemble pour constituer un composant de renfort (6) du genre d'un feutre.

30. Procédé selon l'une des revendications 23 à 27,
caractérisé en ce que
le composant de renfort (6) est réalisé sous forme d'un demi-produit (17), en répandant de façon irrégulière des éléments de renfort sous forme de fils ou de fibres sur la feuille mince (4), les éléments de renfort (6) individuels étant fixés sur la feuille mince (4).

31. Procédé selon l'une des revendications 23 à 30,
caractérisé en ce que
le composant de renfort (6) est amené en co-extrusion (11) en même temps que la feuille mince (4) et/ou la feuille mince de couverture (5).

32. Procédé selon l'une des revendications 23 à 30,
caractérisé en ce que
le composant de renfort (6) est appliqué sur la feuille mince (4) selon un procédé de doublage, de préférence par calandrage, sur la feuille mince (4).

33. Procédé selon l'une des revendications 23 à 30,
caractérisé en ce que
le composant de renfort (6) est appliqué sur la feuille mince (4) par collage.
